(19) Europäisches Patentamt
European Patent Office
Office européen des brevets

(11) **EP 2 827 302 B1**

(12) **EUROPEAN PATENT SPECIFICATION**

(45) Date of publication and mention
of the grant of the patent:
**25.05.2022 Bulletin 2022/21**

(21) Application number: **14176951.3**

(22) Date of filing: **14.07.2014**

(51) International Patent Classification (IPC):
*G06T 15/50* (2011.01)     *G06T 15/55* (2011.01)

(52) Cooperative Patent Classification (CPC):
**G06T 15/55**

(54) **IMAGE PROCESSING APPARATUS AND METHOD**

BILDVERARBEITUNGSVORRICHTUNG UND -VERFAHREN

APPAREIL ET PROCÉDÉ DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2013 KR 20130083682
18.10.2013 KR 20130124510**

(43) Date of publication of application:
**21.01.2015 Bulletin 2015/04**

(73) Proprietor: **Samsung Electronics Co., Ltd.
Gyeonggi-do 443-742 (KR)**

(72) Inventors:
• **AHN, Min-su**
446-712 Gyeonggi-do (KR)
• **HA, In Woo**
446-712 Gyeonggi-do (KR)
• **LEE, Hyong Euk**
446-712 Gyeonggi-do (KR)

(74) Representative: **Grootscholten, Johannes A.M. et al
Arnold & Siedsma
Bezuidenhoutseweg 57
2594 AC The Hague (NL)**

(56) References cited:
**US-A1- 2011 032 256     US-A1- 2011 069 068
US-A1- 2012 299 922**

• **Greg Nichols ET AL: "Hierarchical Image-Space
Radiosity for Interactive Global Illumination",
Computer Graphics Forum, vol. 28, no. 4, 1 June
2009 (2009-06-01), pages 1141-1149,
XP055706445, ISSN: 0167-7055, DOI:
10.1111/j.1467-8659.2009.01491.x**
• **Ingo Radax: "Instant Radiosity for Real-Time
Global Illumination", TECHNICAL REPORT, 1
May 2008 (2008-05-01), XP055281471, Retrieved
from the Internet:
URL:http://ldc.usb.ve/~alacruz/cursos/ci53
21/clases/Radiosidad/radax-2008-instant
radiosity-paper.pdf [retrieved on 2016-06-17]**

**EP 2 827 302 B1**

## Description

BACKGROUND

1. Field

One or more example embodiments of the following description relate to global illumination-based rendering with respect to a three-dimensional (3D) model, and more particularly, to a method of sampling a virtual point light (VPL) on a 3D space for rendering a 3D space by reflecting indirect illumination such as a radiosity method.

2. Description of the Related Art

In various fields including three-dimensional (3D) games, virtual reality (VR) animations, movies, and the like, there is an increased interest in real time rendering with respect to a 3D model. Among 3D rendering technologies, a radiosity method using global illumination considers not only direct illumination by a direct light source included in the 3D model but also indirect illumination by diffused reflection or a reflected light caused by reflection of the direct illumination by an object, thereby increasing rendering quality. In this case virtual point light (VPL) sampling is necessary, which is for properly arranging VPLs representing an indirect illumination effect in predetermined positions in the 3D model.

US 2011/0032256 A1 discusses separately arranging VPLs for a static object and for a dynamic object, in order to more efficiently render a plurality of frames which differ only in the positioning of the dynamic object. US 2011/0069068 A1 discusses super-sampling VPLs around one or more seed VPLs, with auxiliary VPLs used for the remainder of the scene. US 2012/0299922 A1 discusses calculating a relative influence of a plurality of VPLs on an end result, and discarding VPLs which have a relatively limited influence on a final rendering result.

The paper "Instant Radiosity for Real-Time Global Illumination" by Ingo Radax, TECHNICAL REPORT, 1 May 2008, also describes various methods of improving rendering using radiosity methods. The paper "Hierarchical Image-Space Radiosity for Interactive Global Illumination" by Greg Nichols et al., Computer Graphics Forum, vol. 28, no. 4, 1 June 2009, pages 1141-1149 describes hierarchical subdivision of the image space to accelerate rendering using radiosity methods.

SUMMARY

The foregoing and/or other aspects are achieved by providing an image processing apparatus according to any of claim 1-7.

The foregoing and/or other aspects are achieved by providing an image processing method according to any of claims 8-11.

Additional aspects of example embodiments will be set forth in part in the description which follows and, in part, will be apparent from the description, or may be learned by practice of the disclosure.

BRIEF DESCRIPTION OF THE DRAWINGS

These and/or other aspects will become apparent and more readily appreciated from the following description of example embodiments, taken in conjunction with the accompanying drawings of which:

FIG. 1 illustrates an image processing apparatus according to example embodiments;
FIG. 2 illustrates a three-dimensional (3D) model in which an image processing apparatus according to example embodiments samples a virtual point light (VPL);
FIG. 3 illustrates a plan view of the 3D model of FIG. 2 and direct light;
FIG. 4 illustrates a process of sampling a VPL by an image processing apparatus according to example embodiments;
FIG. 5 illustrates an image processing apparatus according to other example embodiments;
FIG. 6 illustrates a method of dividing a 3D space by a divider according to example embodiments;
FIG. 7 illustrates a method of determining whether to divide individual cells, according to example embodiments;
FIG. 8 illustrates a process of sampling a second VPS in a cell and calculating luminance of the second VPL in an image processing apparatus according to example embodiments;
FIG. 9 illustrates a result of rendering reflecting direct light, according to example embodiments;
FIG. 10 illustrates a result of rendering reflecting indirect light using VPLs, according to example embodiments;
FIG. 11 illustrates a result of rendering reflecting both the rendering result of FIG. 9 and the rendering result of FIG. 10; and
FIG. 12 illustrates an image processing method according to example embodiments.

DETAILED DESCRIPTION

Reference will now be made in detail to embodiments, examples of which are illustrated in the accompanying drawings, wherein like reference numerals refer to like elements throughout. Example embodiments are described below to explain the present disclosure by referring to the figures.

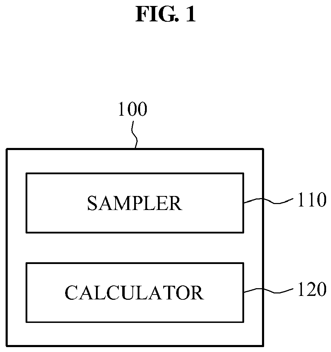

FIG. 1 illustrates an image processing apparatus 100 according to example embodiments. The image processing apparatus 100 arranges virtual point lights (VPLs) on a three-dimensional (3D) model or a 3D space, the VPLs representing natural phenomena such as reflection, diffraction, and the like of light, to reflect a global illumination effect to rendering according to a radiosity method. Herein, such arranging of the VPLs will be referred to as "sampling." By the VPLs, a change in a color value or a luminance of an object on the 3D model may be reflected to the rendering.

Generally, when the number of sampled VPLs is increased, rendering quality may also be increased but rendering speed may be decreased due to an increased calculation amount. To achieve real time rendering by increasing the rendering speed, a radiosity acceleration method is taken into consideration, which samples VPLs by taking into consideration at least one of a position of direct light and an emission direction of direct light. However, in a 3D object region that the direct light may not reach, rendering quality may not be high enough for a calculation amount required for the VPL processing, or a rendering calculation amount needs to be increased to increase the rendering quality.

The image processing apparatus 100 includes a sampler 110 and a calculator 120. The sampler 110 samples at least one first VPL in consideration of at least one of the position and the emission direction of the direct light. Additionally, the sampler 110 samples at least one second VPL in consideration of characteristics of a 3D model or 3D scene, independent of the position or the emission direction of the direct light. The sampling of the first VPL refers to a result of sampling a VPL on the 3D scene in consideration of at least one of the position and the emission direction of the direct light, that is, in a same manner as a conventional method. For example, the sampler 110 may generate a two-dimensional (2D) image using at least one of depth information, normal information, and position information of when the 3D space is viewed in the emission direction of the direct light from a position of a direct light view. Also, the sampler 110 may sample the first VPL on the 3D image according to the conventional method. Thus a sampled first VPL isdefined as a VPL having a 3D position using at least one of the depth information, the normal information, and the position information.

The sampler 110 samples the second VPL in the 3D space in consideration of the 3D space characteristics. The second VPL is sampled, for instance according to following example embodiments, in consideration of complexity of the 3D scene regardless of visibility according to the position or the emitted light of the direct light. That is, in addition to the sampling in consideration of the position and the emission direction of the light, the sampler 110 separately performs sampling of the second VPL independently from the direct light, thereby achieving real time rendering of a realistic image. Since the second VPL is not sampled from the direct light, luminance information of the second VPL may not be calculated directly using the direct light.

The calculator 120 detects first VPLs located adjacent to the second VPL and obtain a weighted average of luminance of the detected first VPLs, thereby calculating the luminance of the second VPL. For example, the calculator 120 may detect a neighboring first VPL located within a threshold distance from the second VPL, from among the first VPLs sampled in consideration of the direct light. Also, the calculator 120 obtains a weighted average of the luminance of the neighboring first VPL and thereby calculate the luminance of the second VPL. For example, the luminance of the second VPL may be calculated using Equation 1.

[Equation 1]

$$I_{VPL\_Scene} = \sum_{i=1}^{n} (w(i) * I_{VPL\_DL(i)})$$

In Equation 1, $I_{VPL\_Scene}$ denotes a luminance value of one particular second VPL sampled in consideration of the 3D scene, independently from the direct light. $I_{VPL\_DL(i)}$ denotes a luminance value of an i-th first VPL adjacent to the second VPL. w(i) denotes a weight indicating contribution of the luminance of the first VPL with respect to the luminance of the second VPL. The weight is increased as a distance to the first VPL is shorter and as a normal direction of the first VPL corresponds more to a position difference vector between the first VPL and the second VPL and the influence increases. The luminance of the second VPL may be calculated by obtaining the weighted average of luminance of an n-number of adjacent first VPLs around the second VPL as shown in Equation 1. The process of generating the second VPL and calculating the luminance of the second VPL will be described in further detail with reference to FIGS.

2 to 4.

Thus, the sampler 110 samples the first VPL in consideration of the direct light and samples the second VPL in consideration of a characteristic of the 3D scene, and the calculator 120 provides luminance information of the second VPL. Therefore, the first VPL and the second VPL may each be used for rendering as VPLs for generating an indirect illumination effect. Once the first VPL and the second VPL are all sampled, rendering is performed according to the radiosity method, by taking into consideration the first VPL and the second VPL as VPLs in the same manner as the conventional rendering process.

The sampler 110 and the calculator 120 may be implemented by physical or logical operation resources included in a central processing unit (CPU) included in the image processing apparatus 100. After the sampling of the first VPL and the second VPL is completed, the rendering of an image viewing the 3D model from a rendering view using the VPLs may be processed in a parallel manner by a graphic processing unit (GPU), distinguished from the CPU. Consequently, the VPL sampling and the image rendering may be accelerated by the parallel processing of the CPU and the GPU. In comparison to a conventional art that generates the VPL only based on the GPU, the parallel processing may greatly increase the operation speed and therefore may be appropriate for real time rendering. In addition, since the direct light, for example the VPL, is generated adaptively to the 3D scene, the parallel processing may be applied to various contents, that is, various 3D models. Also, scalable rendering according to hardware function may be enabled.

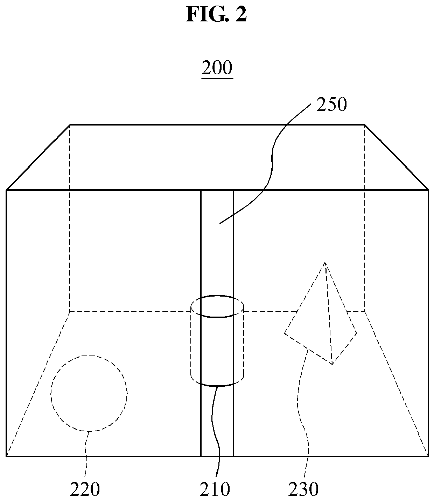

FIG. 2 illustrates a 3D model 200 in which an image processing apparatus according to example embodiments samples a VPL. The 3D model is in the form of a hexahedral room including objects 210, 220, and 230. A gap 250 is formed on one side wall of the hexahedral room. It will be presumed that direct light located at an outside of the room illuminates an inside of the room by way of gap 250 and the room does not include any direct light at the inside.

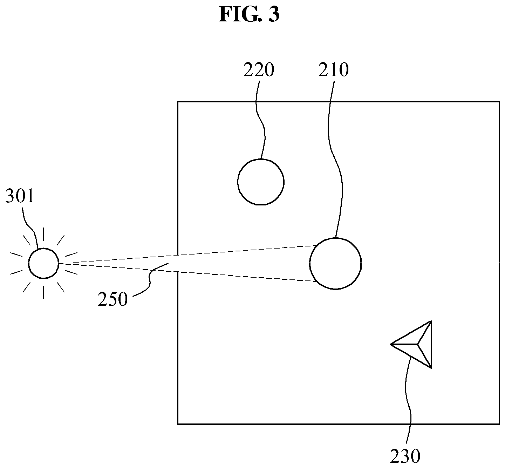

FIG. 3 illustrates a plan view of the 3D model of FIG. 2 and direct light 301. The direct light 301 may be located at the outside of the hexahedral room and emits light toward the inside of the room. When only an effect of the direct light 301 is considered, the light may be reflected or diffracted by the object 210 and a floor, ceiling, or walls of the room, the indirect illumination effect of illuminating other areas, for example the objects 220 and 230, may not be expressed. Therefore, the VPLs may be sampled to express the indirect illumination effect such as soft shadow.

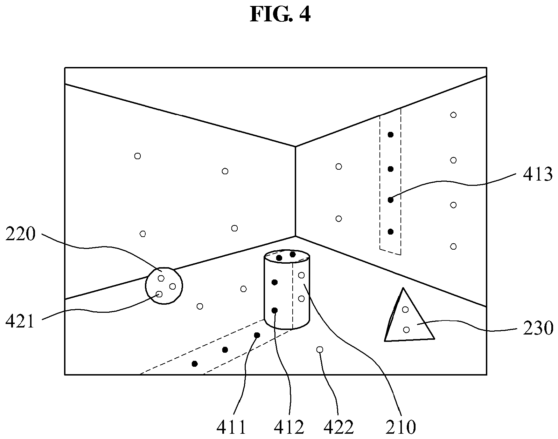

The VPL sampling process according to example embodiments will be described with reference to FIG. 4.

FIG. 4 illustrates a process of sampling a VPL by an image processing apparatus according to example embodiments. The sampler 110 samples first VPLs 411, 412, and 413, which are sampled in consideration of at least one of a position and an emission direction of the direct light 301 of FIG. 3. In FIG. 4, the first VPLs 411, 412, and 413 are expressed by black points. In the same manner as the conventional method, the first VPLs 411, 412, and 413 may be understood as a result of sampling VPLs on a 3D scene in consideration of at least one of the position and the emission direction of the direct light.

In addition to the sampling of the first VPLs, sampler 110 samples second VPLs 421 and 422 in the 3D space in consideration of characteristics of the 3D space such as a geometric complexity of positions of the 3D space, and texture complexity of the 3D space, such as a color. The second VPLs 421 and 422 are expressed by white points. As mentioned previously, the second VPLs 421 and 422 are sampled in consideration of a complexity of the 3D scene irrespective of visibility according to the position and the emission direction of the direct light 301.

For example, in a portion where the geometric complexity, such as a number of vertices present in a unit volume and an inconsistency of the normal of the vertices, is relatively high, a relatively larger number of second VPLs are sampled. Such a method is reasonable since the portion having the high geometric complexity may affect subjective quality of the rendering result. Also, additionally or alternatively, in a portion where the texture complexity such as the color information is relatively high, a relatively larger number of second VPLs are sampled. As in the case of the geometric complexity, when the portion having a higher color complexity is more accurately expressed, the rendering quality may be increased. An example of a portion having a relatively high color complexity is a portion having a relatively large variety of different colors within a unit volume.

Since the sampled second VPLs, such as the second VPL 422, are not sampled based on the direct light, luminance information may not be directly provided. A position of the second VPL 422 may be obtained through a weighted average of positions of vertices adjacent to a sampling point. A normal of the second VPL 422 may be reasonably calculated through a weighted average of normals of the adjacent vertices. Furthermore, a color of the second VPL 422 may also be calculated through a weighted average of the color information of the adjacent vertices. However, since the adjacent vertices may not have luminance values, a luminance value of the second VPL 422 may be obtained with a different method described below.

For example, the calculator 120 may use luminance values of the first VPLs 411 and 412 present within a predetermined distance from the second VPL 422 and Equation 1, to calculate the luminance value of the second VPL 422. The first VPLs considered to calculate the luminance value of the second VPL 422 may be the first VPLs present within the predetermined distance from the second VPL 422. However, this is only an example. For example, alternatively, a number (n) of first VPLs may be selected from among all first VPLs in an increasing order of distance from the second VPL 422, and reflected to the luminance value of the second VPL 422. That is, a first VPL that is closest to the second VPL 422 may be selected first to calculate the luminance value, followed by a first VPL that is second-closest to the second VPL 422, followed by a first VPL that is third-closest to the second VPL 422 and so on.

Also, to calculate the color value of the second VPL 422, the calculator 120 may search for the first VPLs 411 and 412 present within the predetermined distance from the second VPL 422 among the all first VPLs, or may select the number n of first VPLs from among all of the first VPLs in the increasing order of distance from the second VPL 422 and use Equation 1 in which the luminance value is substituted by the color value. That is, a first VPL that is closest to the second VPL 422 may be selected first to calculate the color value, followed by a first VPL that is second-closest to the second VPL 422, followed by a first VPL that is third-closest to the second VPL 422 and so on.

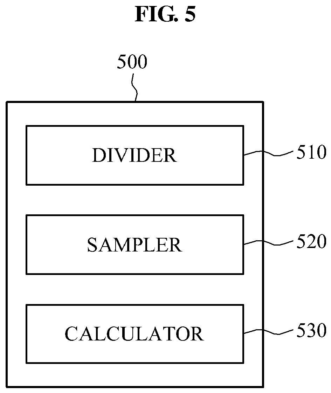

As mentioned previously with reference to FIGS. 1 through 4, the process of sampling the second VPLs in consideration of the complexity of the 3D scene may be more systematically performed through spatial division with respect to the 3D space. The process will be described with reference to FIGS. 5 to 8.

FIG. 5 illustrates an image processing apparatus 500 according to other example embodiments. In comparison to the image processing apparatus 100 of FIG. 1, the image processing apparatus 500 additionally includes a divider 510. The divider 510 divides the 3D space into a plurality of cells by clustering the 3D space, to more systematically consider the complexity of the 3D scene during sampling of the second VPLs. In an embodiment, each of the plurality of cells is comprised of a 3D volume such as a polyhedron, a hexahedron, or a cube.

The divider 510 recursively or iteratively divides the 3D space, thereby generating a plurality of cells. The spatial division and cell generation is repeatedly performed until all individual cells already generated by a previous dividing step during the repeated cell division meet a predetermined division ending condition. The divider 510 may divide an entire space including the 3D model into sub cells and then divide the sub cells again, thereby generating the cells. A process of dividing a parent cell into children cells may include various types, for example, 2 division, 4 division, 8 division, and so forth. When dividing one parent cell into a plurality of children cells, the children cells may have equal volumes or the children cells may each include a same number of vertices. Alternatively, when dividing a parent cell into a plurality of children cells, the children cells may have unequal volumes or the children cells may each include a different number of vertices. Therefore, the cell division may not be limited to any particular example embodiments.

A cell division condition and the division ending condition will be further explained.

In an example case of dividing the entire space, when a parent cell has a predetermined threshold volume or more, the divider 510 may divide the parent cell into a plurality of children cells. That is, the cell division condition in this embodiment is that the volume of the parent cell is greater than or equal to the threshold volume.

As another example, when the number of vertices included in one parent cell exceeds a predetermined threshold value, the parent cell may be divided into the plurality of children cells. That is, the cell division condition in this embodiment is that the parent cell includes at least the predetermined threshold number of vertices.

The divider 510 divides the parent cell when a difference between a maximum characteristic value and a minimum characteristic value of the vertices of the parent cell is greater than or equal to a threshold difference. In this case, the characteristic value includes at least one of a position coordinate, a normal direction, and a color. In detail, when the difference between a maximum value and a minimum value of coordinates of the vertices of the parent cell is greater than or equal to the threshold difference, the parent cell is considered to need the cell division due to high spatial distribution of the vertices. The coordinates may refer to a value related to any of an X, Y, and Z axis, or a distance between a vertex and a coordinate origin. In addition, the cell division may be performed when a normal difference or a color difference among the vertices of the parent cell is greater than or equal to the threshold difference. The threshold difference with respect to the coordinate value, the normal, and the color may be set to different values having different dimensions. That is, the cell division condition in the present embodiment is that the difference between a maximum characteristic value and a minimum characteristic value of the vertices in the parent cell meets or exceeds a predetermined threshold.

In the aforementioned manner, recursive and iterative cell division is performed with respect to cells meeting the cell division condition. When all the cells meet the division ending condition, the divider 510 ends the cell division.

For example, the division ending condition may be considered to be met when all vertices of each of the plurality of cells generated by division are in a visible region. When all vertices included in one cell are in the visible region in a position of the direct light, sampling of the first VPL in consideration of the direct light may have already been performed with respect to the cell. Therefore, cell division may not be additionally performed.

For example, the division ending condition may be met when a VPL having a predetermined threshold density with respect to the cells generated by division is already sampled. Various embodiments may be applied for setting the threshold density. For example, when one first VPL or second VPL is already sampled in one cell, it may be understood that the VPL of the threshold density or more is sampled. Alternatively, a number of sampled VPLs per unit volume in one cell may be considered.

As another example, the division ending condition may be varied according to hardware or software performance of operation resources of the VPL. When the operation resources are sufficient, the division ending condition may be administrated more strictly so that the cell division is performed to the greatest extent possible given operation resources.

As a result, a larger number of the second VPLs may be sampled, thereby improving the rendering result. However, the division ending condition may be flexibly set so long as real time rendering is possible.

For example, the division ending condition may be adaptively set by a user, according to the hardware characteristics, or according to a required quality level, that is, a level of detail (LOD), set by an application performing the rendering. For example, as the required rendering quality is higher, the division ending condition may be more strictly set so that a larger number of the second VPLs are sampled.

When the spatial division is performed by the divider 510, a sampler 520 samples one second VPL, with respect to each cell. The second VPL may be disposed in a vertex included in a cell. Alternatively, the second VPL may be disposed in the 3D space rather than on a particular vertex. For example, the sampler 520 may determine a position of the second VPL by obtaining a weighted average of positions of vertices included in a first cell, which is a particular cell for sampling of the second VPL. In addition, the sampler 520 may determine the normal of the second VPL by obtaining a weighted average of normals of the vertices of the first cell.

When the second VPLs are sampled in the cells generated by the spatial division, a calculator 530 may calculate at least one of a color value and a luminance value of the second VPLs. The calculator 530 may determine the color of the second VPL by obtaining a weighted average of color values of the vertices included in the first cell. The calculator 530 calculates the luminance of the sampled second VPL by obtaining a weighted average of luminance values of the first VPLs adjacent to the second VPL. This is already described with reference to FIGS. 1 to 4 and Equation 1.

Cell division information is referenced during the space division to quickly search the first VPLs adjacent to the second VPL. The cell division information may be hierarchical structure information of the cells stored and administrated during the space division. According to the hierarchical structure, cells adjacent to one cell may be quickly detected. Therefore, an adjacent first VPL may be quickly found by checking presence of a first VPL included in the adjacent cells.

The operation of the divider 510, the sampler 520, and the calculator 530 has been described with reference to FIG. 5. When no conflict is caused with the description of the divider 510, the operation of the sampler 520 and the calculator 530 may directly refer to the description of the sampler 110 and the calculator 120 of FIG. 1. The divider 510, the sampler 520, and the calculator 530 are implemented by physical or logical operation elements included in the CPU of the image processing apparatus 500. The process of generating a rendering image using the generated VPLs, that is, the process of generating a resultant image in consideration of a direct illumination effect and an indirect illumination effect is performed by a GPU separately provided from the CPU. Accordingly, as aforementioned, the VPL sampling and the image rendering may be accelerated by parallel operations of the CPU and the GPU.

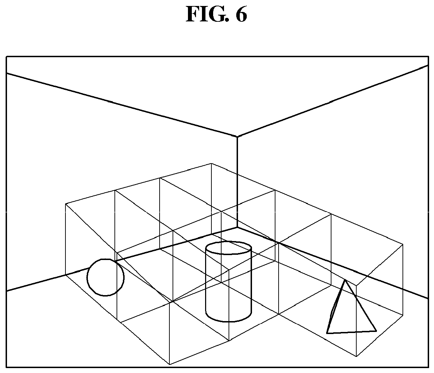

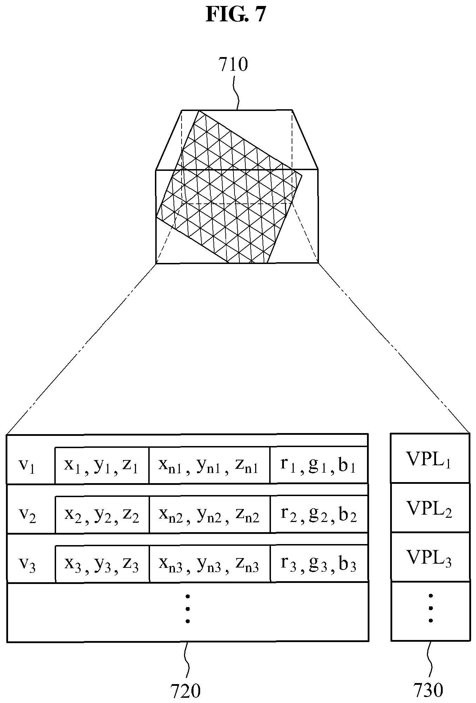

FIG. 6 illustrates a method of dividing a 3D space with a divider according to example embodiments. As described with reference to FIG. 5, the divider generates a plurality of cells by recursively dividing the 3D space. FIG. 6 illustrates the generation process of cells by space division. A process of determining whether to perform additional division with respect to individual cells will be described with reference to FIG. 7.

FIG. 7 illustrates a method of determining whether to divide individual cells, according to example embodiments. The divider determines whether to perform additional division with respect to an individual cell 710 or whether to end division without additionally dividing the cell 710. During space division, information 720 storing positions, normals, colors, and the like of vertices V1, V2, V3, and the like included in the cell 710 may be referenced. In addition, information 730 on already sampled VPLs in the cell 710 may be referenced.

The divider determines whether the cell 710 meets the cell division condition. For example, when a volume of the cell 710 is greater than or equal to a predetermined threshold volume, the divider may additionally divide the cell 710, thereby generating a plurality of children cells from the cell 710. Alternatively, when a number of the vertices V1, V2, V3, and the like of the cell 710 is greater than or equal to a threshold value, the divider may additionally divide the cell 710, thereby generating a plurality of children cells from the cell 710.

When a difference between a maximum characteristic value and a minimum characteristic value of vertices included in a parent cell is greater than or equal to a threshold difference, the divider additionally divides the cell 710. For example, when a difference between a maximum value and a minimum value of position coordinates $(x_1, y_1, z_1)$, $(x_2, y_2, z_2)$, $(x_3, y_3, z_3)$, and the like of the vertices, the cell 710 may be additionally divided, thereby generating the plurality of children cells from the cell 710. As previously mentioned, when comparing the maximum value and the minimum value of the position coordinates, coordinate values of any one of the X, Y, and Z-axis may be compared or all values may be compared. Alternatively, normal vectors $[xn_1, yn_1, zn_1]$, $[xn_2, yn_2, zn_2]$, $[xn_3, yn_3, zn_3]$, and the like of the vertices may be compared. When a difference among the normal vectors is greater than or equal to a threshold value, the cell 710 may be additionally divided, thereby generating a plurality of children cells. The difference among the normal vectors may be obtained by comparing inner products of the normal vectors. Also, color values $(r, g_1, b_1)$, $(r_2, g_2, b_2)$, $(r_3, g_3, b_3)$, and the like of the vertices may be compared and, when a difference in the color values is greater than or equal to a threshold value, the cell 710 may be additionally divided, thereby generating a plurality of children cells. As described above, the threshold difference with respect to the coordinates, the normals, and the colors may be set to different values having different dimensions.

When a division ending condition with respect to the cell 710 is met, the divider does not divide the cell 710 anymore. For example, the division ending condition may be considered to be met with respect to the cell 710 when all vertices V1, V2, V3, and the like of the cell 710 are in a visible region from the position of the direct light. Alternatively, the division ending condition may be considered to be met when VPLs having a predetermined threshold density or a predetermined threshold number of VPLs, such as a VPL1, a VPL2, a VPL3, and so forth, are already sampled with respect to the cell 710.

The cell division condition and division ending condition are previously described in greater detail with reference to FIG. 5.

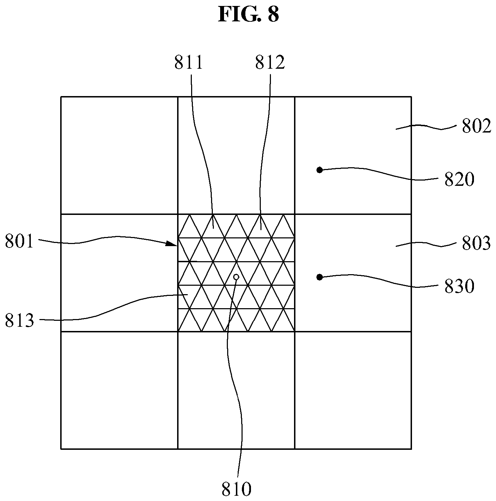

FIG. 8 illustrates a process of sampling a second VPL in a cell and calculating luminance of the second VPL in an image processing apparatus according to example embodiments. A sectional view of nine divided cells is shown as an example. A sampler samples one second VPL 810 in a cell 801. The second VPL 810 may be disposed on vertices included in each cell. The second VPL 810 may be disposed in a 3D space rather than on a particular vertex. For example, the sampler may determine a position of the second VPL 810 by obtaining a weighted average of positions of vertices 811, 812, and 813 included in the cell 801. In addition, the sampler may determine a weighted average of normals of the vertices such as the vertices 811, 812, and 813 of the cell 801 as a normal of the second VPL 810.

When the second VPL 810 is sampled in the cell 801, the calculator may calculate a color and a luminance of the second VPL 810. For example, the calculator may determine the color of the second VPL 810 by obtaining a weighted average of colors of the vertices 811, 812, and 813 of the cell 801. The calculator calculates the luminance of the second VPL 810 by searching for neighboring cells, for example cells 802 and 803, with reference to a hierarchical structure of spatially divided cells and by obtaining a weighted average of luminance values of first VPLs 820 and 830 in the found cells. The calculation is described above with reference to FIGS. 1 to 4 and Equation 1.

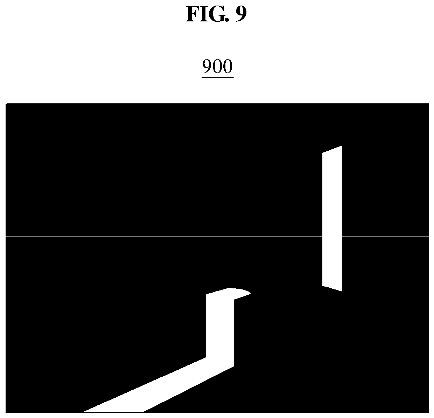

FIG. 9 illustrates a result of rendering reflecting direct light, which is not part of the invention. As described with reference to FIG. 5, rendering of a resultant image may be performed by a GPU (not shown) included in the image processing apparatus 100 or 500. While the first VPLs and the second VPLs are sampled by the divider 510, the sampler 520, and the calculator 530 included in the CPU, the GPU may generate an image 900 reflecting only the direct illumination effect by performing shading in consideration of only the direct light 301 of FIG. 3 in a parallel manner with the CPU.

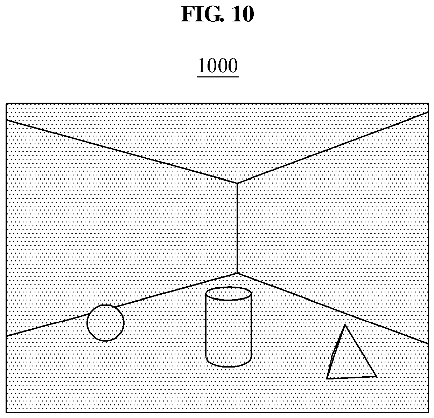

FIG. 10 illustrates a result of rendering reflecting indirect light using VPLs, according to example embodiments. When the first VPLs and the second VPLs are sampled by the divider 510, the sampler 520, and the calculator 530 included in the CPU, a GPU generates a resultant image 1000 in consideration of the indirect illumination effect.

In the image 1000, the indirect illumination effect is expressed by a radiosity method using VPLs. Therefore, a result of similarly rendering physical phenomena such as light reflection and diffraction, for example a soft shadow effect, is provided.

As previously mentioned, at least a part of the rendering process of the resultant image 900 and the resultant image 1000 may be performed in parallel with the sampling of the VPLs performed by the CPU through space division. Accordingly, the VPL sampling and the image rendering may be accelerated.

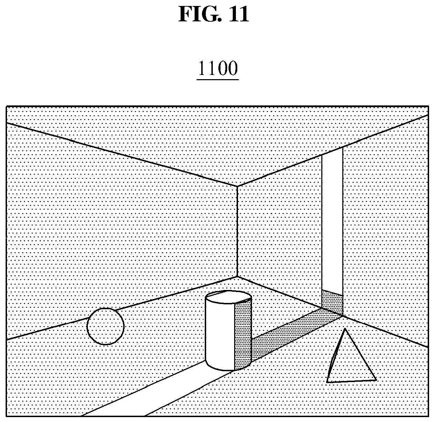

FIG. 11 illustrates a result of rendering reflecting both the rendering result of FIG. 9 and the rendering result of FIG. 10. A final rendering image 1100 may be generated by combining the resultant image 900 reflecting only the direct illumination effect and the resultant image 1000 reflecting the indirect illumination effect. According to the foregoing embodiments, rendering quality of the final rendering image 1100 may be greatly increased for the operation resources.

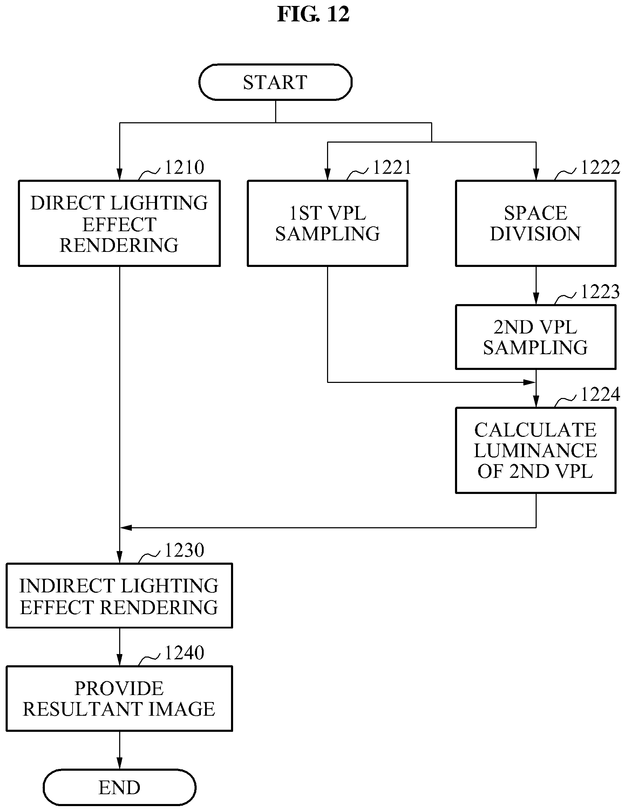

FIG. 12 illustrates an image processing method according to example embodiments. In operation 1210, as described above with reference to FIG. 9, an image 900 generated in consideration of only the direct illumination effect may be rendered. The rendering may be performed by a GPU. In parallel with the operation 1210, a 3D space may be recursively and iteratively divided in operation 1222 as described with reference to FIG. 5. The space division may be performed in a parallel manner by a CPU. A detailed description about the space division, such as the cell division condition and the division ending condition, may reference the description of FIGS. 5 to 7.

In operation 1221, one or more first VPLs are sampled from a direct light view. The first VPLs may be VPLs of which luminance values may be calculated by the direct light. Further to operation 1222, one or more second VPLs are sampled with respect to the divided cells in operation 1223. One second VPL is sampled per every divided cell. In this case, a position of the second VPL may be determined through a weighted average of positions of vertices included in a first cell corresponding to the sampled second VPL. A normal of the second VPL may be determined through a weighted average of normals of the vertices included in the first cell.

In operation 1224, a color and a luminance of the second VPL sampled in the first cell may be calculated. For example, a weighted average of colors of the vertices included in the first cell may be determined as the color of the second VPL. The luminance of the second VPL is calculated through weighted average of luminance values of first VPLs adjacent to the second VPL. Such processes may reference the description with reference to FIGS. 1 to 4, FIG. 8, and Equation 1.

Operations 1221 to 1224 may be performed by the CPU. Since the CPU is appropriate for accelerating operation processing according to a conditional branch, the CPU may accelerate the entire rendering process by operating parallel with the GPU that performs rendering.

In operation 1230, image rendering reflecting the sampled first VPLs and second VPLs is performed, in the manner as described with reference to FIGS. 5 and 9. In operation 1240, a final rendering image may be provided by combining a rendering result reflecting only the direct illumination effect of operation 1210 and a rendering result reflecting the indirect illumination effect of operation 1230.

Thus, sampling of VPLs may be efficiently performed, thereby increasing global illumination rendering quality with respect to given operation resources. In addition, by the parallel processing of the CPU and the GPU, the VPL sampling and the image rendering may be accelerated and accordingly a possibility of real time rendering may be increased.

The units described herein may be implemented using hardware components, software components, or a combination thereof. For example, a processing device may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The above-described embodiments may be recorded, stored, or fixed in one or more non-transitory computer-readable media that includes program instructions to be implemented by a computer to cause a processor to execute or perform the program instructions. The media may also include, alone or in combination with the program instructions, data files, data structures, and the like. The program instructions recorded on the media may be those specially designed and constructed, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations and methods described above, or vice versa.

Any one or more of the software modules described herein may be executed by a dedicated hardware-based computer or processor unique to that unit or by a hardware-based computer or processor common to one or more of the modules. The described methods may be executed on a general purpose computer or processor or may be executed on a particular machine such as the image processing apparatus described herein.

A number of examples have been described above. Nevertheless, it will be understood that various modifications may be made.

Accordingly, other implementations are within the scope of the following claims.

Although a few embodiments have been shown and described, it would be appreciated by those skilled in the art that changes may be made in these embodiments without departing from the principles of the invention, the scope of which is defined in the claims.

**Claims**

1. An image processing apparatus (500) comprising:

   a processor, comprising:

       a sampler (520) configured to sample at least one first virtual point light, 'VPL' (411, 412, 413), on a three-dimensional, '3D' model in a 3D space, in consideration of at least one of the position and the emission direction of direct light (301) illuminating the 3D model;

a divider (510) configured to generate a plurality of cells by recursively dividing the 3D space, comprising repeatedly dividing an individual cell generated by previous division until the individual cell meets a predetermined division ending condition, wherein the predetermined division ending condition is considered met when all vertices included in one cell are in the visible region in a position of the direct light, and wherein the divider is configured to additionally divide an individual cell when a difference between a maximum characteristic value and a minimum characteristic value of the vertices included in the individual cell has been determined to be greater than or equal to a threshold difference, wherein the characteristic value comprises at least one of position coordinates, a normal, and a color,

wherein the sampler (520) is further configured to sample second VPLs (421, 422) irrespective of visibility according to the position and the emission direction of the direct light (301), comprising arranging, in each cell, one second VPL on the 3D model in the 3D space; and

a calculator (530) configured to, for each second VPL, search for neighboring cells by referencing a hierarchical structure of the divided cells, and calculate a luminance of the second VPL by obtaining a weighted average of a luminance of first VPLs in the found cells, wherein the weight is increased as a distance to the respective first VPL is shorter;

wherein the sampler and the calculator are included in the processor and the processor corresponds to a central processing unit (CPU) included in the image processing apparatus;

a graphics processing unit, 'GPU', that renders the 3D space in a rendering view using the at least one first VPL and the second VPLs according to the radiosity method.

2. The image processing apparatus (500) of claim 1, wherein the sampler (520) determines a position of the second VPL (421, 422) by obtaining a weighted average of a position of at least one vertex included in the first cell and/or determines a normal of the second VPL (421, 422) by obtaining a weighted average of a normal of at least one vertex included in the first cell.

3. The image processing apparatus (500) of claim 1 or 2, wherein the calculator (530) determines a color of the second VPL (421, 422) by obtaining a weighted average of a color of at least one vertex included in the first cell.

4. The image processing apparatus (500) of claim 1, 2 or 3, wherein the divider (510) additionally divides an individual cell when a volume of the individual cell is determined to be greater than or equal to a threshold volume and/or wherein the divider (510) additionally divides an individual cell when a number of vertices included in the individual cell has been determined to be greater than or equal to a threshold value.

5. The image processing apparatus (500) of claim 4, wherein the predetermined division ending condition is met when a VPL having a threshold density has already been sampled in the individual cell.

6. The image processing apparatus (500) of claim 4 or 5, wherein the predetermined division ending condition is adaptively set according to at least one of an operation resource performance and a demanded rendering quality of the image processing apparatus.

7. The image processing apparatus (500) as claimed in any of the preceding claims, wherein the graphics processing unit is configured to render the 3D space using the first VPL and the second VPL in parallel with the sampling performed by the CPU.

8. An image processing method comprising:

sampling (1221) at least one first virtual point light, 'VPL', on a three-dimensional, '3D' model in a 3D space, in consideration of at least one of the position and the emission direction of direct light illuminating the 3D model; recursively dividing (1222) the 3D space, comprising repeatedly dividing an individual cell generated by previous division until the individual cell meets a predetermined division ending condition, wherein the predetermined division ending condition is considered met when all vertices included in one cell are in the visible region in a position of the direct light, and wherein the divider is configured to additionally divide an individual cell when a difference between maximum characteristic value and a minimum characteristic value of the vertices included in the individual cell has been determined to be greater than or equal to a threshold difference, wherein the characteristic value comprises at least one of position coordinates, a normal, and a color; sampling (1223) second VPLs irrespective of visibility according to the position and the emission direction of the direct light, comprising arranging, in each cell, one second VPL on the 3D model in the 3D space;
for each second VPL, searching for neighboring cells by referencing a hierarchical structure of the plurality of divided cells, and calculating (1224) a luminance of the second VPL by obtaining a weighted average of a luminance of first VPLs in the found cells, wherein the weight is increased as a distance to the respective first VPL is shorter; and,
rendering (1230) the 3D space using the at least one first VPL and the second VPLs according to the radiosity method.

9. The image processing method of claim 8, wherein
the predetermined division ending condition is met when a VPL having a threshold density has already been sampled in the individual cell.

10. The image processing method of claim 8 or 9 wherein sampling of the second VPL (1223) comprises:
determining a position of the second VPL by obtaining a weighted average of a position of at least one vertex included in the first cell.

11. The image processing method of any of claims 8-10, wherein the sampling (1221, 1223) is performed by a central processing unit, "CPU"; and
the rendering (1230) is performed by a graphics processing unit in parallel with the sampling performed by the CPU.

12. A non-transitory computer readable recording medium storing a program for instructing a computer to implement an image processing method as claimed in any of the claims 8-11.

**Patentansprüche**

1. Bildverarbeitungsvorrichtung (500), die Folgendes umfasst:

   einen Prozessor, der Folgendes umfasst:

      einen Abtaster (520), der konfiguriert ist, um mindestens ein erstes virtuelles Punktlicht (VPL, Virtual Point Light) (411, 412, 413) auf einem dreidimensionalen (3D) Modell in einem 3D-Raum unter Berücksichtigung der Position und/oder der Emissionsrichtung eines direkten Lichts (301), das das 3D-Modell beleuchtet, abzutasten;
      einen Teiler (510), der konfiguriert ist, um eine Vielzahl von Zellen durch rekursives Teilen des 3D-Raums zu erzeugen, umfassend das wiederholte Teilen einer einzelnen Zelle, die durch eine vorherige Teilung erzeugt wurde, bis die einzelne Zelle eine vorbestimmte Teilungsendbedingung erfüllt, wobei die vorbestimmte Teilungsendbedingung als erfüllt angesehen wird, wenn alle in einer Zelle enthaltenen Scheitelpunkte im sichtbaren Bereich an einer Position des direkten Lichts liegen, und wobei der Teiler dazu konfiguriert ist, zusätzlich eine einzelne Zelle zu teilen, wenn bestimmt wurde, dass eine Differenz zwischen einem maximalen charakteristischen Wert und einem minimalen charakteristischen Wert der in der einzelnen Zelle enthaltenen Scheitelpunkte größer oder gleich einer Schwellendifferenz ist, wobei der charakteristische Wert Positionskoordinaten, eine Normale und/oder eine Farbe umfasst,
      wobei der Abtaster (520) ferner konfiguriert ist, um zweite VPLs (421, 422) ungeachtet der Sichtbarkeit gemäß der Position und der Emissionsrichtung des direkten Lichts (301) abzutasten, umfassend das Anordnen eines zweiten VPL in jeder Zelle auf dem 3D-Modell im 3D-Raum; und
      einen Rechner (530), der konfiguriert ist, für jedes zweite VPL, zum Suchen nach benachbarten Zellen durch Bezugnahme auf eine hierarchische Struktur der geteilten Zellen und zum Berechnen einer Luminanz des zweiten VPL durch Erhalten eines gewichteten Mittels einer Luminanz von ersten VPLs in den gefundenen Zellen, wobei die Gewichtung erhöht wird, wenn ein Abstand zu dem jeweiligen ersten VPL kürzer ist;
      wobei der Abtaster und der Rechner in dem Prozessor enthalten sind und der Prozessor einer Zentraleinheit (CPU, Central Processing Unit) entspricht, die in der Bildverarbeitungsvorrichtung enthalten ist;

   eine Grafikverarbeitungseinheit (GPU, Graphics Processing Unit), die den 3D-Raum unter Verwendung des mindestens einen ersten VPL und der zweiten VPLs gemäß dem Radiosity-Verfahren in einer Wiedergabeansicht rendert.

2. Bildverarbeitungsvorrichtung (500) nach Anspruch 1, wobei der Abtaster (520) eine Position des zweiten VPL (421, 422) bestimmt, indem ein gewichtetes Mittel einer Position von mindestens einem in der ersten Zelle enthaltenen Scheitelpunkt erhalten wird und/oder eine Normale des zweiten VPL (421, 422) bestimmt, indem ein gewichtetes Mittel einer Normalen von mindestens einem in der ersten Zelle enthaltenen Scheitelpunkt erhalten wird.

3. Bildverarbeitungsvorrichtung (500) nach Anspruch 1 oder 2, wobei der Rechner (530) eine Farbe des zweiten VPL (421, 422) bestimmt, indem ein gewichtetes Mittel einer Farbe von mindestens einem in der ersten Zelle enthaltenen Scheitelpunkt erhalten wird.

4. Bildverarbeitungsvorrichtung (500) nach Anspruch 1, 2 oder 3, wobei der Teiler (510) zusätzlich eine einzelne Zelle teilt, wenn bestimmt wird, dass ein Volumen der einzelnen Zelle größer oder gleich einem Schwellenvolumen ist, und/oder wobei der Teiler (510) zusätzlich eine einzelne Zelle teilt, wenn bestimmt wurde, dass eine Anzahl von Scheitelpunkten, die in der einzelnen Zelle enthalten sind, größer oder gleich einem Schwellenwert ist.

5. Bildverarbeitungsvorrichtung (500) nach Anspruch 4, wobei die vorbestimmte Teilungsendbedingung erfüllt ist, wenn ein VPL mit einer Schwellendichte bereits in der einzelnen Zelle abgetastet wurde.

6. Bildverarbeitungsvorrichtung (500) nach Anspruch 4 oder 5, wobei die vorbestimmte Teilungsendbedingung adaptiv gemäß einer Betriebsressourcenleistung und/oder einer geforderten Wiedergabequalität der Bildverarbeitungsvorrichtung eingestellt wird.

7. Bildverarbeitungsvorrichtung (500) nach einem der vorhergehenden Ansprüche, wobei die Grafikverarbeitungseinheit konfiguriert ist, um den 3D-Raum unter Verwendung des ersten VPL und des zweiten VPL parallel zu der von der CPU durchgeführten Abtastung zu rendern.

8. Verfahren zur Bildverarbeitung, das Folgendes umfasst:

Abtasten (1221) mindestens eines ersten virtuellen Punktlichts (VPL, Virtual Point Light) auf einem dreidimensionalen (3D) Modell in einem 3D-Raum unter Berücksichtigung der Position und/oder der Emissionsrichtung eines direkten Lichts, das das 3D-Modell beleuchtet;
rekursives Teilen (1222) des 3D-Raums, umfassend das wiederholte Teilen einer einzelnen Zelle, die durch eine vorherige Teilung erzeugt wurde, bis die einzelne Zelle eine vorbestimmte Teilungsendbedingung erfüllt, wobei die vorbestimmte Teilungsendbedingung als erfüllt angesehen wird, wenn alle in einer Zelle enthaltenen Scheitelpunkte im sichtbaren Bereich an einer Position des direkten Lichts liegen, und wobei der Teiler dazu konfiguriert ist, eine einzelne Zelle zusätzlich zu teilen, wenn bestimmt wurde, dass eine Differenz zwischen einem maximalen charakteristischen Wert und einem minimalen charakteristischen Wert der in der einzelnen Zelle enthaltenen Scheitelpunkte größer oder gleich einer Schwellendifferenz ist, wobei der charakteristische Wert Positionskoordinaten, eine Normale und/oder eine Farbe umfasst,

Abtasten (1223) von zweiten VPLs ungeachtet der Sichtbarkeit gemäß der Position und der Emissionsrichtung des direkten Lichts, umfassend das Anordnen eines zweiten VPL in jeder Zelle auf dem 3D-Modell im 3D-Raum; und
für jedes zweite VPL, Suchen nach benachbarten Zellen durch Bezugnahme auf eine hierarchische Struktur der Vielzahl von geteilten Zellen und Berechnen (1224) einer Luminanz des zweiten VPL durch Erhalten eines gewichteten Mittels einer Luminanz von ersten VPLs in den gefundenen Zellen, wobei die Gewichtung erhöht wird, wenn ein Abstand zu dem jeweiligen ersten VPL kürzer ist; und
Rendern (1230) des 3D-Raums unter Verwendung des mindestens einen ersten VPL und der zweiten VPLs gemäß dem Radiosity-Verfahren.

9. Bildverarbeitungsverfahren nach Anspruch 8, wobei die Teilungsendbedingung erfüllt ist, wenn ein VPL mit einer Schwellendichte bereits in der einzelnen Zelle abgetastet wurde.

10. Bildverarbeitungsverfahren nach Anspruch 8 oder 9, wobei das Abtasten des zweiten VPL (1223) Folgendes umfasst:
Bestimmen einer Position des zweiten VPL durch Erhalten eines gewichteten Mittels einer Position von mindestens einem in der ersten Zelle enthaltenen Scheitelpunkt.

11. Bildverarbeitungsverfahren nach einem der Ansprüche 8 bis 10, wobei das Abtasten (1221, 1223) durch eine zentrale Verarbeitungseinheit (CPU, Central Processing Unit) durchgeführt wird; und
das Rendern (1230) von einer Grafikverarbeitungseinheit parallel zu der von der CPU durchgeführten Abtastung durchgeführt wird.

**12.** Nicht flüchtiges, computerlesbares Speichermedium, auf dem ein Programm gespeichert ist, um einen Computer anzuweisen, ein Bildverarbeitungsverfahren nach einem der Ansprüche 8 bis 11 zu implementieren.

**Revendications**

**1.** Dispositif de traitement d'image (500) comprenant :

un processeur, comprenant ;

un échantillonneur (520) conçu pour échantillonner au moins une première lumière ponctuelle virtuelle (VPL, virtual point light) (411, 412, 413) sur un modèle tridimensionnel (3D), dans un espace 3D, eu égard à la position et/ou à la direction d'émission de la lumière directe (301) éclairant le modèle 3D ;
un diviseur (510) conçu pour générer une pluralité de cellules en divisant récursivement l'espace 3D, y compris en divisant de manière répétée une cellule individuelle générée par une division précédente jusqu'à ce que la cellule individuelle remplisse une condition de fin de division prédéterminée, la condition de fin de division prédéterminée étant considérée remplie lorsque tous les sommets présents dans une cellule sont dans le domaine du visible dans une position de la lumière directe, et le diviseur étant conçu pour diviser en outre une cellule individuelle lorsqu'une différence entre une valeur caractéristique maximale et une valeur caractéristique minimale des sommets présents dans la cellule individuelle a été déterminée comme étant supérieure ou égale à une différence seuil, ladite valeur caractéristique comprenant des coordonnées de position, une normale et/ou une couleur,
ledit échantillonneur (520) étant conçu en outre pour échantillonner des deuxièmes VPL (421, 422) indépendamment de la visibilité selon la position et la direction d'émission de la lumière directe (301), y compris l'agencement, dans chaque cellule, d'un deuxième VPL sur le modèle 3D dans l'espace 3D ; et
un calculateur (530) conçu, pour chacun des deuxièmes VPL, à chercher des cellules voisines, en référençant une structure hiérarchique des cellules divisées, et à calculer la luminance du deuxième VPL, en obtenant une moyenne pondérée de la luminance de premiers VPL dans les cellules trouvées, le poids augmentant tandis que la distance par rapport au premier VPL respectif diminue ;
ledit échantillonneur et ledit calculateur étant inclus dans le processeur et ledit processeur correspondant à une unité centrale de traitement (CPU, central processing unit) incluse dans le dispositif de traitement d'image ;

un processeur graphique (GPU, graphics processing unit) qui effectue le rendu de l'espace 3D dans une vue de rendu au moyen de l'au moins un premier VPL et des deuxièmes VPL selon la méthode de la radiosité.

**2.** Dispositif de traitement d'image (500) selon la revendication 1, dans lequel l'échantillonneur (520) détermine la position du deuxième VPL (421, 422) par obtention d'une moyenne pondérée de la position d'au moins un sommet présent dans la première cellule et/ou détermine la normale du deuxième VPL (421, 422) par obtention d'une moyenne pondérée de la normale d'au moins un sommet présent dans la première cellule.

**3.** Dispositif de traitement d'image (500) selon la revendication 1 ou 2, dans lequel le calculateur (530) détermine la couleur du deuxième VPL (421, 422) par obtention d'une moyenne pondérée de la couleur d'au moins un sommet présent dans la première cellule.

**4.** Dispositif de traitement d'image (500) selon la revendication 1, 2 ou 3, dans lequel le diviseur (510) divise en outre une cellule individuelle lorsque le volume de la cellule individuelle est déterminé comme étant supérieur ou égal à un volume seuil et/ou dans lequel le diviseur (510) divise en outre une cellule individuelle lorsque le nombre de sommets présents dans la cellule individuelle a été déterminé comme étant supérieur ou égal à une valeur seuil.

**5.** Dispositif de traitement d'image (500) selon la revendication 4, dans lequel la condition de fin de division prédéterminée est remplie lorsqu'un VPL présentant une densité seuil a déjà été échantillonné dans la cellule individuelle

**6.** Dispositif de traitement d'image (500) selon la revendication 4 ou 5, dans lequel la condition de fin de division prédéterminée est réglée de manière adaptative selon la performance des ressources d'exploitation et/ou la qualité de rendu exigée du dispositif de traitement d'image.

**7.** Dispositif de traitement d'image (500) selon l'une quelconque des revendications précédentes, dans lequel le processeur graphique est conçu pour effectuer le rendu de l'espace 3D au moyen du premier VPL et du deuxième VPL parallèlement à l'échantillonnage effectué par la CPU.

**8.** Procédé de traitement d'image comprenant :

l'échantillonnage (1221) d'au moins une première lumière ponctuelle virtuelle (VPL, lumière ponctuelle virtuelle) sur un modèle tridimensionnel (3D) dans un espace 3D, eu égard à la position et/ou à la direction d'émission de la lumière directe éclairant le modèle 3D ;
la division récursive (1222) de l'espace 3D, comprenant la division répétée d'une cellule individuelle générée par une division précédente jusqu'à ce que la cellule individuelle remplisse une condition de fin de division prédéterminée, la condition de fin de division prédéterminée étant considérée remplie lorsque tous les sommets présents dans une cellule sont dans le domaine du visible dans une position de la lumière directe, et le diviseur étant conçu pour diviser en outre une cellule individuelle lorsqu'une différence entre une valeur caractéristique maximale et une valeur caractéristique minimale des sommets présents dans la cellule individuelle a été déterminée comme étant supérieure ou égale à une différence seuil, ladite valeur caractéristique comprenant des coordonnées de position, une normale et/ou une couleur,

l'échantillonnage (1223) de deuxièmes VPL indépendamment de la visibilité selon la position et la direction d'émission de la lumière directe, y compris l'agencement, dans chaque cellule, d'un deuxième VPL sur le modèle 3D dans l'espace 3D ;
pour chacun des deuxièmes VPL, la recherche des cellules voisines, en référençant une structure hiérarchique de la pluralité de cellules divisées, et le calcul de la luminance du deuxième VPL en obtenant une moyenne pondérée de la luminance de premiers VPL dans les cellules trouvées, le poids augmentant tandis que la distance par rapport au premier VPL respectif diminue; et
le rendu (1230) de l'espace 3D au moyen de l'au moins un premier VPL et des deuxièmes VPL selon la méthode de la radiosité.

**9.** Procédé de traitement d'image selon la revendication 8, dans lequel la condition de fin de division prédéterminée est remplie lorsqu'un VPL présentant une densité seuil a déjà été échantillonné dans la cellule individuelle.

**10.** Procédé de traitement d'image selon la revendication 8 ou 9, dans lequel l'échantillonnage du deuxième VPL (1223) comprend :
la détermination de la position du deuxième VPL par obtention d'une moyenne pondérée de la position d'au moins un sommet présent dans la première cellule.

**11.** Procédé de traitement d'image selon l'une quelconque des revendications 8 à 10, dans lequel l'échantillonnage (1221, 1223) est effectué par une unité centrale de traitement (CPU, central processing unit) ; et
le rendu (1230) est effectué par un processeur graphique parallèlement à l'échantillonnage effectué par la CPU.

**12.** Support d'enregistrement non transitoire lisible par ordinateur sur lequel est enregistré un programme destiné à instruire un ordinateur en vue de la mise en œuvre d'un procédé de traitement d'image selon l'une quelconque des revendications 8 à 11.

**FIG. 1**

**FIG. 2**

<u>200</u>

**FIG. 3**

**FIG. 4**

**FIG. 5**

500

| | |
|---|---|
| DIVIDER | 510 |
| SAMPLER | 520 |
| CALCULATOR | 530 |

FIG. 6

# FIG. 7

710

| $v_1$ | $x_1, y_1, z_1$ | $x_{n1}, y_{n1}, z_{n1}$ | $r_1, g_1, b_1$ |
|---|---|---|---|
| $v_2$ | $x_2, y_2, z_2$ | $x_{n2}, y_{n2}, z_{n2}$ | $r_2, g_2, b_2$ |
| $v_3$ | $x_3, y_3, z_3$ | $x_{n3}, y_{n3}, z_{n3}$ | $r_3, g_3, b_3$ |
| $\vdots$ | | | |

| |
|---|
| $VPL_1$ |
| $VPL_2$ |
| $VPL_3$ |
| $\vdots$ |

720

730

# FIG. 8

FIG. 9

900

# FIG. 10

1000

**FIG. 11**

<u>1100</u>

**FIG. 12**

START

↓ ~1210

DIRECT LIGHTING
EFFECT
RENDERING

~1221

1ST VPL
SAMPLING

~1222

SPACE
DIVISION

↓ ~1223

2ND VPL
SAMPLING

↓ ~1224

CALCULATE
LUMINANCE
OF 2ND VPL

~1230

INDIRECT LIGHTING
EFFECT RENDERING

↓ ~1240

PROVIDE
RESULTANT IMAGE

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110032256 A1
- US 20110069068 A1
- US 20120299922 A1

**Non-patent literature cited in the description**

- **INGO RADAX.** Instant Radiosity for Real-Time Global Illumination. *TECHNICAL REPORT,* 01 May 2008
- **GREG NICHOLS et al.** Hierarchical Image-Space Radiosity for Interactive Global Illumination. *Computer Graphics Forum,* 01 June 2009, vol. 28 (4), 1141-1149